(19) Europäisches Patentamt
European Patent Office
Office européen des brevets

(11) EP 2 800 242 B1

(12) **EUROPEAN PATENT SPECIFICATION**

(45) Date of publication and mention
of the grant of the patent:
**29.08.2018 Bulletin 2018/35**

(51) Int Cl.:
***H02J 50/12*** *(2016.01)*

(21) Application number: **11878861.1**

(86) International application number:
**PCT/JP2011/080169**

(22) Date of filing: **27.12.2011**

(87) International publication number:
**WO 2013/098931 (04.07.2013 Gazette 2013/27)**

(54) **WIRELESS POWER SUPPLY SYSTEM**

DRAHTLOSES STROMVERSORGUNGSSYSTEM

SYSTÈME D'ALIMENTATION ÉLECTRIQUE SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Fuji Machine Mfg. Co., Ltd.**
**Chiryu-shi**
**Aichi 472-8686 (JP)**

(72) Inventors:
• **NOMURA, Takeshi**
  **Chiryu-shi**
  **Aichi 472-8686 (JP)**
• **ISHIURA, Naomichi**
  **Chiryu-shi**
  **Aichi 472-8686 (JP)**

(74) Representative: **Grünecker Patent- und**
**Rechtsanwälte**
**PartG mbB**
**Leopoldstraße 4**
**80802 München (DE)**

(56) References cited:
**EP-A1- 2 405 556      EP-A2- 2 312 726**
**JP-A- 2009 296 857    JP-A- 2010 136 464**
**US-A1- 2010 187 913   US-A1- 2010 259 109**

EP 2 800 242 B1

## Description

Technical Field

The present invention relates to a wireless power supply system that supplies AC power to a power reception apparatus by using resonance of the electromagnetic field between a power transmission element and a power reception element.

Background Art

Examples of a wireless power supply system include a system that supplies AC power to a power reception apparatus by using resonance of the electromagnetic field between a power transmission element and a power reception element. The system, which performs power supply by using the resonance of the electromagnetic field, is capable of supplying power to the power reception apparatus even when the power transmission apparatus and the power reception apparatus are separated to a certain extent. Accordingly, the recently developed system is considered as a power supply system with high convenience. The following Patent Literatures disclose a technology relating to the power supply system using the resonance of the electromagnetic field. Document US 2010/259109 A1 discloses a wireless power supply system according to the preamble of claim 1.
PTL 1: JP-A-11-155245
PTL 2: JP-A-2007-228794

Summary of Invention

Technical Problem

In the wireless power supply system using the resonance of the electromagnetic field, when power is supplied to the power transmission element, the electromagnetic field is formed between the power transmission element and the power reception element, and power is supplied to the power reception apparatus by using the resonance of the electromagnetic field. That is, when a resonance frequency of the power transmission apparatus and a resonance frequency of the power reception apparatus are equal to each other, the power transmission element and the power reception element resonate and are electromagnetically coupled to each other, and thus power is supplied to the power reception apparatus. Therefore, for example, in a case where the resonance frequency of the power reception apparatus varies and thus the frequency range of AC power capable of being supplied to the power reception apparatus varies, there is a concern that efficiency in power supply to the power reception apparatus may decrease, or power may not be supplied to the power reception apparatus.
The invention has been made in consideration of the above-described circumstances, and an object thereof is to provide a wireless power supply system capable of efficiently supplying power to a power reception apparatus even when a frequency range of AC power capable of being supplied to the power reception apparatus varies.

Solution to Problem

To accomplish the above-described object, according to the present invention, there is provided a wireless power supply system according to claim 1.
Preferably, according to a first preferred aspect of the present invention, in such a wireless power supply system the frequency determination unit may determine the frequency during supply to a frequency that corresponds to a half of a value obtained by adding the value of the first frequency and the value of the second frequency to each other.
According to another preferred embodiment, forming a second preferred aspect, the power reception apparatus of the new wireless power supply system may include a transmitter that detects whether or not AC power is supplied to the power reception apparatus and transmits a detection result to the control device, and the frequency measurement unit may measure the first frequency and the second frequency on the basis of the detection result from the transmitter.
Moreover, preferably, according to a preferred third aspect, when the first frequency and the second frequency are measured, the frequency changing unit may adjust the changing circuit in such a manner that the frequency of AC power supplied to the power transmission element is raised.
It is, moreover, preferred that, according to a fourth preferred aspect of the present invention, when the first frequency and the second frequency are measured, the frequency changing unit may adjust the changing circuit in such a manner that the frequency of AC power supplied to the power transmission element is lowered.
According to another favorable fifth aspect of the present invention, the control device may include a storage unit storing the frequency while being supplied, said frequency being determined by the frequency determination unit, and the wireless power supply system may be configured in such a manner that AC power of said frequency which is stored in the afore-indicated storage unit is supplied when power is supplied again to the power reception apparatus (memory function).
According to another favorable sixth aspect of the present invention, the frequency changing unit may include a power supply stopping unit that stops power supply to the power reception apparatus by changing the frequency of AC power supplied to the power transmission element to a frequency corresponding to a value different from a value between the value of the first frequency and the value of the second frequency.

Advantageous Effects of Invention

In the wireless power supply system according to the present invention, the frequency of AC power when the state of power supply to the power reception apparatus varies between the state in which AC power is actually supplied to the power reception apparatus and the state in which AC power is not supplied is measured. The frequency of AC power when the state of power supply to the power reception apparatus varies between the two states includes the first frequency and the second frequency, and a frequency during supply, which is the frequency of AC power during supply of AC power to the power reception apparatus is determined to a frequency that corresponds to a value between a value of the first frequency and a value of the second frequency. According to this, the frequency of AC power transmitted from the power transmission element can be appropriately adjusted, and thus even when a frequency range of AC power that can be supplied to the power reception apparatus varies, it is possible to efficiently supply power to the power reception apparatus.

In addition, in the wireless power supply system according to the first preferred aspect, the frequency during supply is determined to a frequency that corresponds to an average value of a value of the first frequency and a value of the second frequency. In a case where the frequency of AC power transmitted from the power transmission element is the first frequency or the second frequency, power supplied to the power reception apparatus is typically zero, and in a case where the frequency of AC power transmitted from the power transmission element is a frequency corresponding to an average value between a value of the first frequency and a value of the second frequency, power supplied to the power reception apparatus typically becomes the largest power. Accordingly, according to the wireless power supply system according to its first preferred aspect, it is possible to supply power to the power reception apparatus in the most efficient manner.

In addition, in the wireless power supply system according to its second preferred aspect, a transmitter that detects whether or not AC power is supplied to the power reception apparatus and transmits a detection result to the control device is provided. According to this, it is possible to reliably determine the timing of one state in which AC power is supplied to the power reception apparatus and another state in which AC power is not supplied varies to the other state, or the timing at which the other state varies to the one state, and thus it is possible to appropriately measure the first frequency and the second frequency.

In addition, in the wireless power supply system according to a third preferred aspect thereof, when the first frequency and the second frequency are measured, the changing circuit is adjusted in such a manner that the frequency of AC power transmitted from the power transmission element is raised. Moreover, it is advantageous in the wireless power supply system according to a fourth preferred aspect thereof, when the first frequency and the second frequency are measured, the changing circuit is adjusted in such a manner that the frequency of AC power transmitted from the power transmission element is lowered. According to this, it is possible to measure the first frequency and the second frequency in a relatively simple manner.

In addition, in the wireless power supply system advantageously designed further according to a fifth preferred aspect, the determined frequency during supply is stored in said frequency storage unit for storing the supply frequency while, additionally, also AC power of the frequency during supply which is stored in the frequency storage unit is supplied when power is supplied again to the power reception apparatus. According to this, it is possible to perform power supply to the power reception apparatus without performing measurement of the first frequency and the second frequency, and the like (memory function), and thus it is possible to shorten the time necessary for adjustment of the frequency of AC power to be transmitted from the power transmission element.

In addition, in the wireless power supply system according to the preferred sixth aspect thereof, when terminating power supply to the power reception apparatus, the frequency of AC power transmitted from the power transmission element is changed to a frequency corresponding to a value different from a value between the value of the first frequency and the value of the second frequency. According to this, it is possible to easily stop the power supply to the power reception apparatus without turning off a main power source, and the like.

Hereinafter the present invention is explained by means of an example thereof in conjunctions with the accompanying drawings, wherein:

Brief Description of Drawings

FIG. 1 is a perspective view illustrating an electronic component mounter machine provided with a wireless power supply system that is an example of the present invention;
FIG. 2 is a perspective view illustrating a moving device and a mounting head which are provided to the electronic component mounter machine shown in FIG. 1;
FIG. 3 is a block diagram illustrating a mounter module control device provided to the electronic component mounter machine shown in FIG. 1;
FIG. 4 is a block diagram illustrating the wireless power supply system that is an example of the present invention;
FIG. 5 is a graph illustrating a relationship between a frequency of AC power transmitted from a power transmission apparatus and power supplied to a power reception apparatus; and
FIG. 6 is a flowchart illustrating a frequency calibration program.

Description of Embodiments

Hereinafter, as embodiments for carrying out the invention, examples of the invention will be described in detail with reference to the attached drawings.

<Configuration of Electronic Component Mounter Machine>

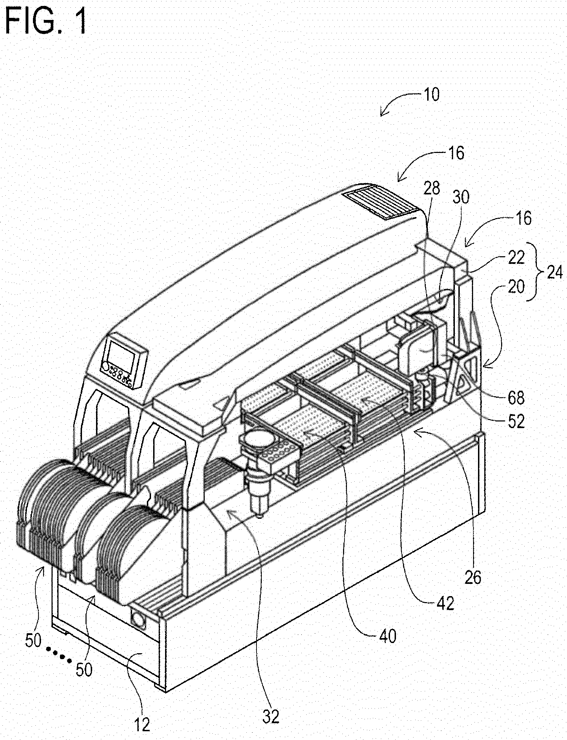

An Electronic component mounter machine (hereafter, abbreviated to "mounter machine" in some cases) 10 is shown in FIG. 1. The drawing is a perspective view with some parts of external components of the mounter machine 10 omitted. The mounter machine 10 includes one system base 12 and two electronic component mounter modules (hereafter, abbreviated to "mounter modules" in some cases) 16 which are arranged above the system base 12 to line up side by side adjacently to each other, and is used to perform the mounting work of electronic components on a circuit board. In the following description, a direction in which the mounter modules 16 are lined up side by side is referred to as an X-axis direction and a horizontal direction perpendicular to the X-axis direction is referred to as a Y-axis direction.

Each of the mounter modules 16, which are provided to the mounter machine 10, mainly includes a mounter module main body 24 including a frame portion 20 and a beam portion 22 suspended above the frame portion 20; a conveyance device 26 that conveys a circuit board in the X-axis direction and fixes the circuit board to a position that is set; a mounting head 28 that mounts an electronic component on the circuit board fixed by the conveyance device 26; a moving device 30 that is disposed in the beam portion 22 and moves the mounting head 28 in the X-axis direction and the Y-axis direction; and a supply device 32 that is disposed on a front side of the frame portion 20 and supplies the electronic component to the mounting head 28.

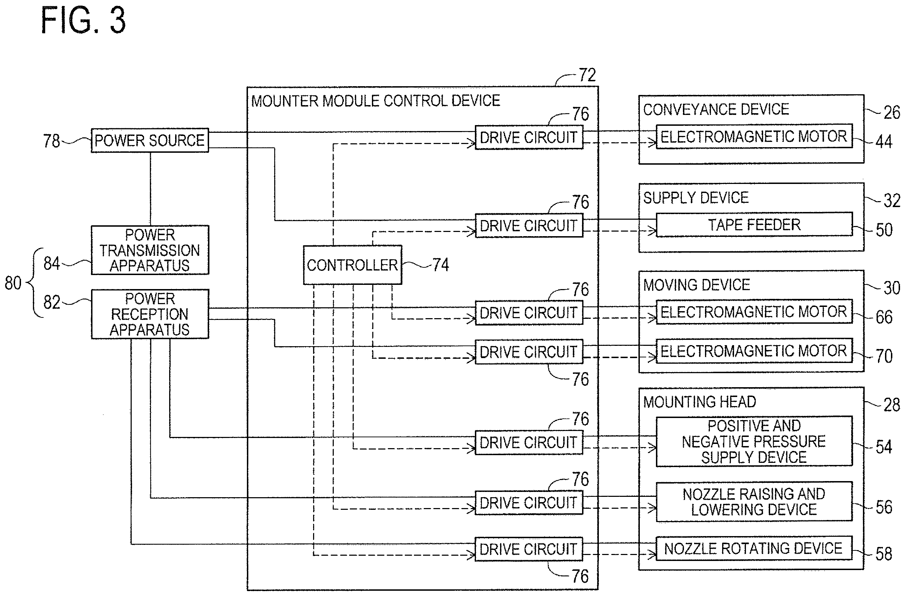

The conveyance device 26 includes two conveyor devices 40 and 42, and the two conveyor devices 40 and 42 are disposed at the central portion of the frame portion 20 in the Y-axis direction and extend in the X-axis direction to be parallel with each other. Each of the two conveyor devices 40 and 42 is configured to convey the circuit board supported by each of the conveyor devices 40 and 42 in the X-axis direction by using an electromagnetic motor (refer to FIG. 3) 44, and to retain the circuit board at a predetermined position in a fixing manner.

In addition, the supply device 32 is disposed at an end portion on a front side of the frame portion 20. The supply device 32 is configured as a feeder-type supply device, and includes a plurality of tape feeders 50 that retains a taped electronic component and transmits the electronic component one by one. In addition, the supply device 32 is configured to supply an electronic component to a supply position for the mounting head 28 by each of the plurality of tape feeders 50.

In addition, the mounting head 28 mounts an electronic component on the circuit board retained by the conveyance device 26, and includes a suction nozzle 52 thereof that suctions the electronic component on a lower surface. The suction nozzle 52 communicates with and is subject to negative and positive pressure by means of a negative pressure air path and a positive pressure air path through a positive and negative pressure supply device (refer to FIG. 3) 54, and has a configuration in which the electronic component is suctioned and retained at a negative pressure, and when a slight positive pressure is supplied, the retained electronic component is detached therefrom. In addition, the mounting head 28 includes a nozzle raising and lowering device (refer to FIG. 3) 56 that raises and lowers the suction nozzle 52, and a nozzle rotating device (refer to FIG. 3) 58 that allows the suction nozzle 52 to rotate around the axial center thereof. The mounting head 28 can change a position of the retained electronic component in a vertical direction, and a retained posture of the electronic component.

In addition, the suction nozzle 52 is detachably attached to the mounting head 28, and the suction nozzle 52 can be modified in accordance with the size, the shape, and the like of the electronic component.

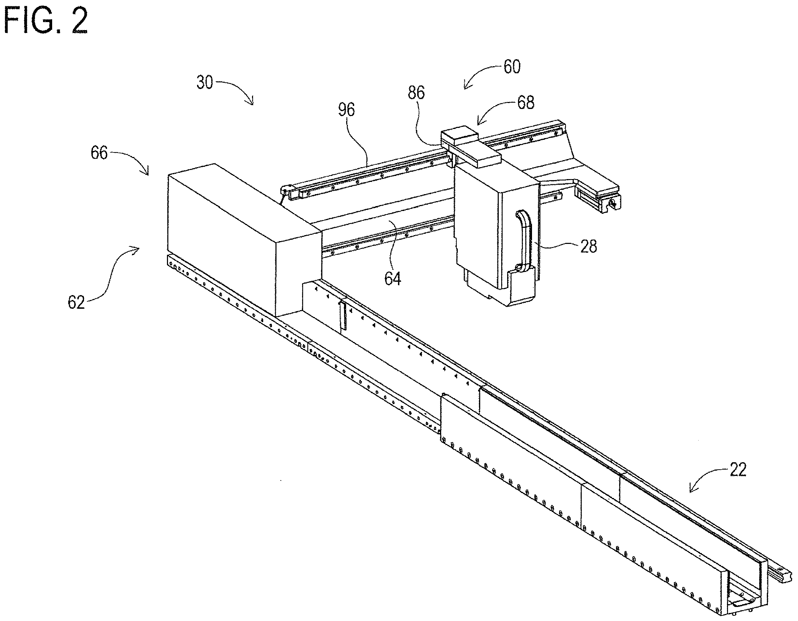

The mounting head 28 can be moved to an arbitrary position on the frame portion 20 by the moving device 30. Specifically, as shown in FIG. 2, the moving device 30 includes an X-axis direction slide mechanism 60 that moves the mounting head 28 in the X-axis direction, and a Y-axis direction slide mechanism 62 that moves the mounting head 28 in the Y-axis direction. The Y-axis direction slide mechanism 62 includes a Y-axis slider 64 provided to the beam portion 22 in a manner capable of moving in the Y-axis direction, and an electromagnetic motor 66 as a drive source. The Y-axis slider 64 can be moved to an arbitrary position in the Y-axis direction by the electromagnetic motor 66. In addition, the X-axis direction slide mechanism 60 includes a Y-axis slider 68 that is provided to the Y-axis slider 64 in a manner capable of moving in the X-axis direction, and an electromagnetic motor (refer to FIG. 3) 70 as a drive source. The X-axis slider 68 can be moved to an arbitrary position in the X-axis direction by the electromagnetic motor 70. The mounting head 28 is mounted on the X-axis slider 68, and thus the mounting head 28 can be moved to an arbitrary position above the frame portion 20 by the moving device 30. In addition, the mounting head 28 is detachable from the X-axis slider 68 in a one-touch manner, and can be changed to a different kind of working head, for example, a dispenser head.

In addition, as shown in FIG. 3, the mounter module 16 includes a mounter module control device 72. The mounter module control device 72 includes a controller 74 is substantially constituted by a computer provided with a CPU, a ROM, a RAM, and the like, and a plurality of drive circuits 76 that correspond to the electromagnetic motors 44, 66, and 70, the tape feeder 50, the positive and negative pressure supply device 54, the nozzle raising and lowering device 56, and the nozzle rotating device 58, respectively. In addition, drive sources of the conveyance device, the moving device, and the like are connected to the controller 74 through the respective drive circuits 76, and thus the controller 74 can control the operation of the conveyance device, the moving device, and the like. In addition, a power source 78 is connected to the drive circuits 76 that correspond to the conveyance device 26 and the supply device 32, respectively, and power is supplied to the conveyance device 26 and the supply device 32 from the power source 78. On the other hand, the power source 78 is connected to the drive circuits 76 corresponding to the mounting head 28 and the moving device 30, respectively, through a wireless power supply system 80, and power is supplied to the mounting head 28 and the moving device 30 from the power source 78 through the wireless power supply system 80.

<Configuration of Wireless Power Supply System>

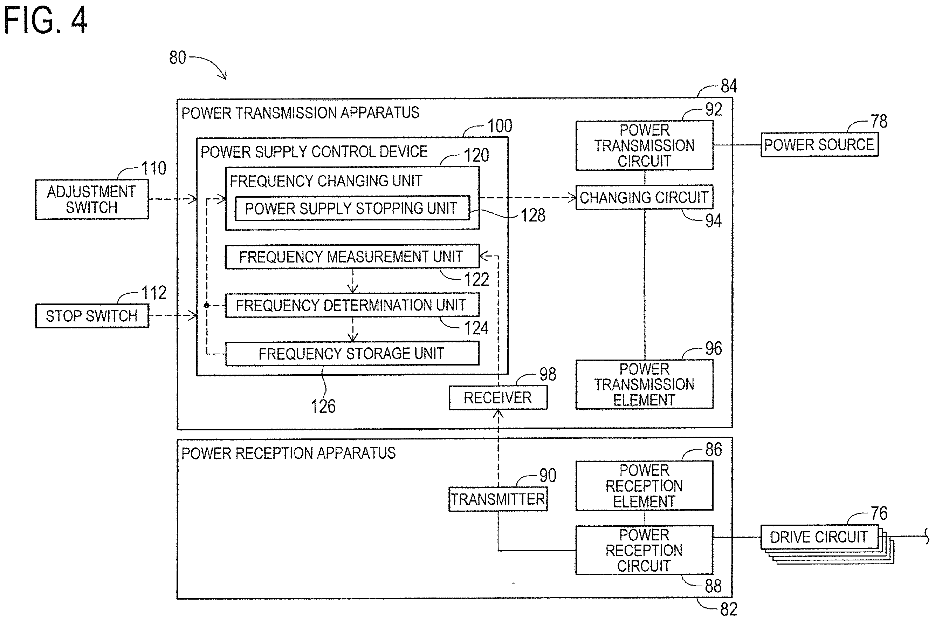

The wireless power supply system 80 includes a power reception apparatus 82 that is connected to the respective drive circuits 76, and a power transmission apparatus 84 that supplies power from the power source 78 to the power reception apparatus 82 in a wireless manner. As shown in FIG. 4, the power reception apparatus 82 includes a power reception element 86 which receives power supplied from the power transmission apparatus 84, a power reception circuit 88 to which power is supplied through the power reception element 86, and a transmitter 90 that determines whether or not power is supplied to the power reception circuit 88 and transmits the determination result to the power transmission apparatus 84. The power reception circuit 88 is connected to the power reception element 86 and the respective drive circuits 76, and can supply power which the power reception element 86 receives to the respective drive circuits 76. The power reception circuit 88 is also connected to the transmitter 90, and the transmitter 90 can detect whether or not power is supplied to the power reception circuit 88.

In addition, the power transmission apparatus 84 includes a power transmission circuit 92 that is connected to the power source 78, a changing circuit 94 that changes a frequency of AC power, a power transmission element 96 that transmits power to the power reception element 86, a receiver 98 that receives the detection result transmitted from the transmitter 90 of the power reception apparatus 82, and a power supply control device 100 that adjusts the changing circuit 94. The changing circuit 94 is connected to the power transmission circuit 92 and the power transmission element 96, and can change a frequency of AC power supplied from the power source 78 through the power transmission circuit 92 and supply AC power to the power transmission element 96. The power supply control device 100 is connected to the changing circuit 94, and the frequency of AC power transmitted to the power transmission element 96 is changed by the power supply control device 100 in a manner capable of being controlled. In addition, the receiver 98 is connected to the power supply control device 100, and the detection result transmitted from the transmitter 90 is input to the power supply control device 100.

The power transmission element 96 of the power transmission apparatus 84 is constituted by a plate-shaped electrode, and is disposed on an upper surface of the Y-axis slider 64 of the moving device 30 to extend in the X-axis direction as shown in FIG. 2. On the other hand, the power reception element 86 of the power reception apparatus 82 is also constituted by a plate-shaped electrode, and is disposed to the X-axis slider 68 in a state of facing the power transmission element 96 through a gap. The power transmission element 96 extends across a region of the X-axis slider 68 which is capable of moving in the X-axis direction, and even when the X-axis slider 68 is moved in the X-axis direction, a state in which the power reception element 86 and the power transmission element 96 face each other is retained. In this state, power transmitted from the power transmission element 96 is supplied to the power reception apparatus 82 through the power reception element 86, and is supplied to the respective drive circuits 76 of the moving device 30 and the mounting head 28.

<Control of Wireless Power Supply System>

In the wireless power supply system 80, an electric field is formed between the power transmission element 96 and the power reception element 86 by supply of power to the power transmission element 96, and power is supplied to the power reception apparatus 82 by using resonance of the electric field. In wireless power supply using the resonance of the electric field, when a resonance frequency of a power transmission side device and a resonance frequency of a power reception side device are equal to each other, the power transmission element 96 and the power reception element 86 resonate and are electromagnetically coupled to each other, and thus power is supplied to the power reception apparatus 82. Accordingly, it is necessary to transmit AC power of a frequency, at which the power transmission element 96 and the power reception element 86 are capable of resonating, to the power reception apparatus 82 from the power transmission apparatus 84, and the power reception apparatus 82 is configured to receive AC power of a frequency in a specific range.

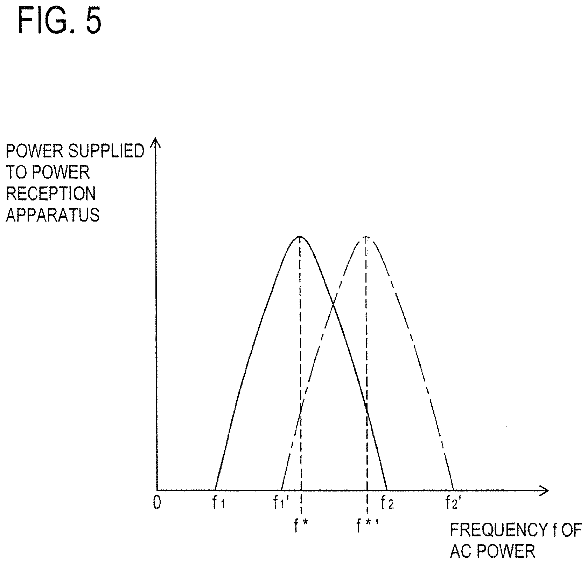

Specifically, in a case where a frequency f of AC power, which is transmitted from the power transmission apparatus 84, is equal to or higher than a first frequency f1 and is equal to or lower than a second frequency f2, power can be supplied to the power reception apparatus 82. In addition, a relationship between the frequency f of AC power transmitted from the power transmission apparatus 84 and the power supplied to the power reception apparatus 82 is as indicated by a solid-line of FIG. 5. When the frequency f of AC power becomes a frequency corresponding to a half of a value obtained by adding the first frequency f1 and the second frequency f2 to each other, it is possible to supply power to the power reception apparatus 82 in the most efficient manner. The frequency at which power can be supplied in the most efficient manner is set as a frequency f* during power supply, and when power is supplied to the power reception apparatus 82, the changing circuit 94 is adjusted by the power supply control device 100 in order for AC power of the frequency f* during power supply to be transmitted to the power transmission element 96.

As described above, when AC power of the frequency f* during power supply is transmitted to the power transmission element 96, it is possible to supply power to the power reception apparatus 82 in the most efficient manner. However, when load applied to a device to which power is supplied by the wireless power supply system 80, specifically, the moving device 30 and the mounting head 28 varies, the frequency f* during power supply also varies. Specifically, the mounting head 28 is detachable from the moving device 30, and when a working head different from the mounting head 28, for example, a dispenser head may be mounted on the moving device 30 in some cases. In addition, the suction nozzle 50 of the mounting head 28 can be changed, and thus, for example, a light suction nozzle may be changed to a heavy suction nozzle. In this case, load applied to the moving device 30 and the mounting head 28 varies, and thus the relationship between the frequency f of AC power and supply power to the power reception apparatus 82 varies, for example, as indicated by one dot chain line of FIG. 5.

As can be seen from the drawings, when load applied to the moving device 30 and the like varies, power of only approximately 1/3 times the power, which is supplied to power reception apparatus 82 (solid line) before load variation, is supplied to the power reception apparatus 82 (one dot chain line) after load variation during supply of AC power of the frequency f* during power supply. Therefore, in a case where load applied to the moving device 30 and the mounting head 28 varies, and the like, it is necessary to adjust the frequency f* during power supply, and thus in the wireless power supply system 80, frequency calibration control for adjusting the frequency f* during supply is performed.

In the frequency calibration control, first, a frequency of AC power during supply state variation, in which a state of power supply to the power reception apparatus 82 varies between a state in which AC power is actually supplied to the power reception apparatus 82 and a state in which AC power is not supplied, is measured. Specifically, a first frequency f1 that is a frequency of AC power during variation from a state in which a current does not flow to the power reception circuit 88 to a state in which a current flows, and a second frequency f2 that is a frequency of AC power during variation from a state in which a current flows to the power reception circuit 88 to a state in which a current does not flow are measured. In addition, an adjustment switch 110 (refer to FIG. 4), which is connected to the power supply control device 100, is provided to the wireless power supply system 80, and in a case where the adjustment switch 110 is operated by an operator, adjustment of the frequency f* during power supply is performed.

When measuring the first frequency f1, a frequency of AC power, which is transmitted to the power reception apparatus 82 from the power transmission element 96, is adjusted to an initial frequency $\alpha$ that is set to a relatively low frequency. The initial frequency $\alpha$ is set to a value at which the power reception apparatus 82 cannot receive power, and power is not supplied to the power reception apparatus 82, and thus a current does not flow to the power reception circuit 88. The transmitter 90, which is connected to the power reception circuit 88, can detect flow of a current inside the power reception circuit 88, and a detection result is transmitted to the power supply control device 100. That is, when AC power of the initial frequency $\alpha$ is transmitted to the power reception apparatus 82 from the power transmission element 96, a detection result indicating that power is not supplied to the power reception apparatus 82 is transmitted to the power supply control device 100.

Next, a frequency of AC power, which is transmitted to the power reception apparatus 82 from the power transmission element 96, is adjusted to a frequency obtained by adding a specific frequency $\Delta f$ to the initial frequency $\alpha$, and a detection result obtained by the transmitter 90 is transmitted to the power supply control device 100. In a case where the detection result indicates that power is not supplied to the power reception apparatus 82, the specific frequency $\Delta f$ is added to the frequency that is adjusted at the immediately previous time, and thus AC power is adjusted to a frequency to which the specific frequency $\Delta f$ is added. AC power is adjusted in such a manner that the frequency is gradually raised, and thus a detection result obtained by the transmitter 90 varies from a result indicating that power is not supplied to the power reception apparatus 82 to a result indicating that power is supplied. A frequency of AC power when the detection result varies is measured as the first frequency f1.

Subsequently, as is the case with the measurement of the first frequency f1, AC power is adjusted in such a manner that a frequency is raised by the specific frequency $\Delta f$ so as to measure the second frequency f2. However, a detection result obtained by the transmitter 90 when the second frequency f2 is measured at first is a result indicating that power is supplied to the power reception apparatus 82, and when the frequency is gradually raised, a detection result varies from the result indicating that power is supplied to the power reception apparatus 82 to a result indicating that power is not supplied. A frequency of AC power when the detection result varies is measured as the second frequency f2.

In addition, when the first frequency f1 and the second frequency f2 are measured, the frequency f* during power supply is calculated by the following equation:

$$f* = (f1+f2)/2$$

AC power of the calculated frequency f* during power supply is transmitted from the power transmission element 96 to the power reception apparatus 82, and thus it is possible to effectively supply power to the power reception apparatus 82.

In addition, when the frequency f* during power supply is determined, the determined frequency f* during power supply is stored in the power supply control device 100, and AC power of the stored frequency f* during power supply is transmitted from the power transmission element 96 to the power reception apparatus 82 during power re-supply. According to this, measurement of the first frequency f1 and the second frequency f2, and the like may be omitted during power re-supply, and thus shortening of calibration of the frequency f* during power supply may be realized. However, in a case where the adjustment switch 110 is operated by an operator, the frequency f* during power supply is determined again in the above-described order. As a result, even when the working head, the suction nozzle, and the like are exchanged, the frequency f* during power supply is appropriately adjusted, and thus it is possible to effectively supply power to the power reception apparatus 82.

In addition, in a case where it is necessary to exchange the working head, the suction nozzle, and the like during power supply to the power reception apparatus 82, it is necessary to stop power supply to the power reception apparatus 82. In this case, in the wireless power supply system 80, a frequency of AC power transmitted from the power transmission element 96 to the power reception apparatus 82 is changed to a frequency lower than the first frequency f1, or a frequency higher than the second frequency f2. According to this, it is possible to stop the power supply to the power reception apparatus 82 without turning off a main power source. In addition, a stop switch 112 (refer to FIG. 3), which is connected to the power supply control device 100, is provided to the wireless power supply system 80, and in a case where the stop switch 112 is operated by an operator, frequency change is performed, and thus power supply to the power reception apparatus 82 is stopped.

<Control Program>

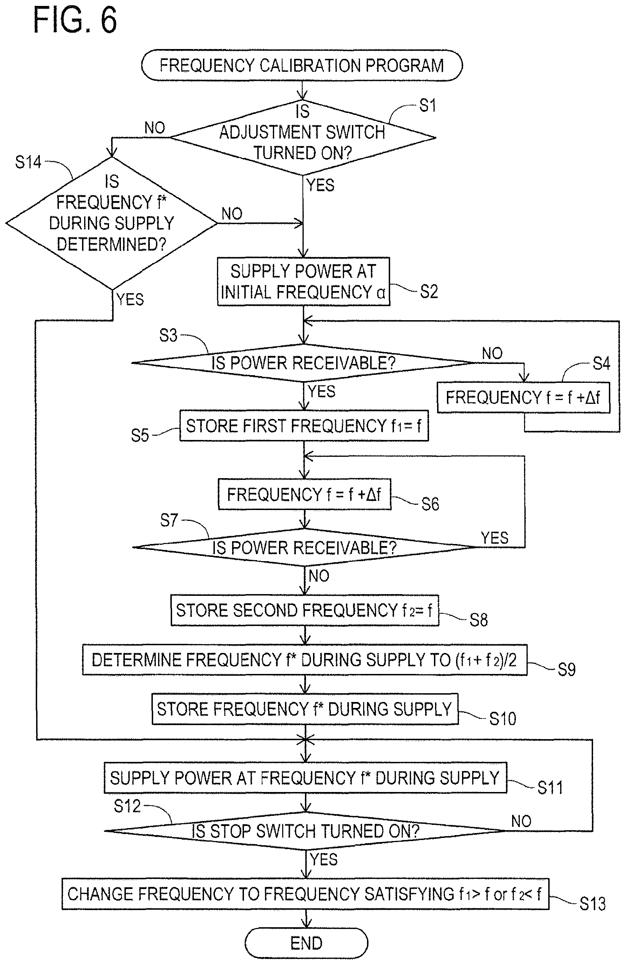

The above-described calibration control of the frequency f* during power supply is performed when a frequency calibration program shown in a flowchart of FIG. 6 is executed by the power supply control device 100.

First, in the frequency calibration program, in step 1 (hereinafter, simply abbreviated to "S1". This is true of other steps), it is determined whether or not the adjustment switch 110 is operated by an operator. In a case where it is determined that the adjustment switch 110 is operated, in S2, the changing circuit 94 is adjusted, and thus the frequency f of AC power transmitted from the power transmission element 96 to the power reception apparatus 82 is adjusted to the initial frequency α. Next, in S3, it is determined whether or not power is supplied to the power reception apparatus 82. Specifically, it is determined whether or not the detection result transmitted from the transmitter 90 of the power reception apparatus 82 indicates that power is supplied to the power reception apparatus 82. In a case where it is determined that power is not supplied to the power reception apparatus 82, in S4, the changing circuit 94 is adjusted, and the frequency f of AC power transmitted to the power reception apparatus 82 is changed to a frequency obtained by adding the specific frequency Δf to the frequency f of power that is actually supplied to the power reception apparatus 82. In addition, in S3, it is determined whether or not power is supplied to the power reception apparatus 82, and the processes in S3 and S4 are repeated until it is determined that power is supplied to the power reception apparatus 82.

In S3, when it is determined that power is supplied to the power reception apparatus 82, in S5, the frequency f of AC power when it is determined that power is supplied to the power reception apparatus 82 is stored as the first frequency f1. Next, in S6, the changing circuit 94 is adjusted, and the frequency f of AC power transmitted to the power reception apparatus 82 is changed to a frequency obtained by adding the specific frequency Δf to the frequency f of power that is actually supplied to the power reception apparatus 82. In addition, in S7, it is determined whether or not power is supplied to the power reception apparatus 82.

In S7, in a case where it is determined that power is supplied to the power reception apparatus 82, the process returns to S6, and the changing circuit 94 is adjusted, and the frequency f of AC power transmitted to the power reception apparatus 82 is changed to a frequency obtained by adding the specific frequency Δf to the frequency f of power that is actually supplied to the power reception apparatus 82. In addition, in S7, it is determined whether or not power is supplied to the power reception apparatus 82, and the processes in S6 and S7 are repeated until it is determined that power is not supplied to the power reception apparatus 82.

In S7, when it is determined that power is not supplied to the power reception apparatus 82, in S8, the frequency f of AC power when it is determined that power is not supplied to the power reception apparatus 82 is stored as the second frequency f2. In addition, in S9, the frequency f* during supply is calculated by the above-described equation, and is determined as a calculation value thereof. Subsequently, in S10, the determined frequency f* during supply is stored in the power supply control device 100, and in S11, the changing circuit 94 is adjusted, and thus AC power of the frequency f* during supply is supplied to the power reception apparatus 82.

Subsequently, in S12, it is determined whether or not the stop switch 112 is operated by an operator, and in a case where it is determined that the stop switch 112 is not operated, the processes in S11 and S12 are repetitively performed. In addition, in a case where it is determined that the stop switch 112 is operated, in S13, the changing circuit 94 is adjusted, and the frequency f of AC power that is transmitted from the power transmission element 96 to the power reception apparatus 82 is changed to a frequency lower than the first frequency f1 or a frequency higher than the second frequency f2. Through the above-described processes, the calibration control is performed. In addition, in S1, in a case where it is determined that the adjustment switch 110 is not operated, the processes subsequent to S11 are performed.

<Functional Configuration of Power Supply Device>

The power supply control device 100 that executes the frequency calibration program may be considered as a device having a functional configuration shown in FIG. 4 when considering an execution process thereof. As can be seen from the drawing, the power supply control device 100 is provided with a frequency changing unit 120 as a function unit that executes the processes in S4, S6, S11, and S13, that is, as a function unit that adjusts the changing circuit 94 to change the frequency of AC power supplied to the power transmission element 96, a frequency measurement unit 122 as a function unit that executes the processes in S5 and S8, that is, as a function unit that measures the first frequency f1 and the second frequency f2, a frequency determination unit 124 as a function unit that executes the process in S9, that is, as a function unit that determines the frequency f* during supply on the basis of the first frequency f1 and the second frequency f2, and a frequency storage unit 126 as a function unit that executes the process in S10, that is, as a function unit that stores the determined frequency f* during supply, respectively. In addition, the frequency changing unit 120 is provided with a power supply stopping unit 128 as a function unit that executes the process in S13, that is, a function unit that adjusts the changing circuit 94 to change the frequency of AC power supplied to the power transmission element 96 to a frequency lower than the first frequency f1 or a frequency higher than the second frequency f2.

In addition, in the example, the wireless power supply system 80 is an example of a wireless power supply system, and the power reception apparatus 82 and the power transmission apparatus 84, which constitute the wireless power supply system 80, are examples of a power reception apparatus and a power transmission apparatus. In addition, the power reception element 86 and the transmitter 90, which constitute the power reception apparatus 82, are examples of a power reception element and a transmitter. In addition, the power transmission circuit 92, the changing circuit 94, the power transmission element 96, and the power supply control device 100, which constitute the power transmission apparatus 84 are examples of a power transmission circuit, a changing circuit, a power transmission element, and a control device. In addition, the frequency changing unit 120, the frequency measurement unit 122, the frequency determination unit 124, the frequency storage unit 126, and the power supply stopping unit 128, which constitute the power supply control device 100, are examples of a frequency changing unit, a frequency measurement unit, a frequency determination unit, a storage unit for storing values of a supplied frequency (frequency storage unit), and a power supply stopping unit.

In addition, the invention is not limited to the above-described example, and may be executed by various aspects in which various changes and modifications are made on the basis of knowledge of a person skilled in the art. Specifically, for example, in the example, as the power transmission element and the power reception element, a flat plate-shaped electrode is employed, but a coil may be employed. However, in a case of employing the coil as the power transmission element and the power reception element, AC power is supplied to the power reception apparatus by using resonance of the magnetic field between the power transmission element and the power reception element.

In addition, in the example, when measuring the first frequency f1 and the second frequency f2, the changing circuit is adjusted in such a manner that the frequency of AC power supplied to the power transmission element 96 is raised, but the changing circuit may be adjusted in such a manner that the frequency of AC power is lowered. However, in a case where the changing circuit is adjusted in such a manner that the frequency of AC power is lowered, it is necessary to set an initial frequency of the AC power when the measurement is initiated to a relatively high frequency β. In addition, the changing circuit may be adjusted in such a manner that the frequency of AC power is raised or lowered. Specifically, for example, the first frequency f1 is measured by adjusting the changing circuit in such a manner that the frequency of AC power is gradually raised from the initial frequency α. Then, the second frequency f2 may be measured by adjusting the changing circuit in such a manner that the frequency of AC power is gradually lowered from the initial frequency β.

In addition, in the example, the frequency f* during supply is determined as an average value between the first frequency f1 and the second frequency f2, but may be determined as an arbitrary value as long as the value is a value between the first frequency f1 and the second frequency f2. Specifically, for example, an average value obtained by applying weighting to any one of the first frequency f1 and the second frequency f2, and the like are also possible. Specifically, the frequency f* during supply may be calculated by the following expression.

$$f* = (a \cdot f1 + b \cdot f2)/(a+b)$$

Here, a and b are not negative real numbers, and at least one of a and b is not zero.

Reference Signs List

    80: Wireless power supply system
    82: Power reception apparatus
    84: Power transmission apparatus
    86: Power reception element
    90: Transmitter
    92: Power transmission circuit
    94: Changing circuit
    96: Power transmission element
    100: Power supply control device (control device)
    120: Frequency changing unit
    122: Frequency measurement unit
    124: Frequency determination unit
    126: Frequency storage unit (storage unit of frequency during supply)
    128: Power supply stopping unit

**Claims**

1.  A wireless power supply system (80) comprising:

    (a) a power transmission apparatus (84) including a power transmission element (96) and a power transmission circuit (92) that supplies AC power to the power transmission element (96); and
    (b) a power reception apparatus (82) including a power reception element (86) that is disposed to be spaced away from the power transmission element (96),

    wherein AC power is supplied to the power reception apparatus (82) by using resonance of an electromagnetic field between the power transmission element (96) and the power reception element (86), and the power transmission apparatus (84) includes a changing circuit (94) that changes a frequency of AC power supplied to the power transmission element (96), and a control device (100) including (A) a frequency changing unit (120) that adjusts the changing circuit (94) to change the frequency of AC power supplied to the power transmission element (96) in a manner capable of being controlled,
**characterized in that**
the control device (100) also includes (B) a frequency measurement unit (122) that measures a first frequency that is a frequency of AC power during supply state variation in which a state of power supply to the power reception apparatus (82) varies from a state in which AC power is actually supplied to the power reception apparatus (82) to a state in which AC power is not supplied as a result of the changing of the frequency of AC power by the frequency changing unit (120), and a second frequency that is a frequency different from the first frequency and is a frequency of AC power during supply state variation in which a state of power supply to the power reception apparatus (82) varies from a state in which AC power is not supplied to the power reception apparatus (82) to a state in which AC power is actually supplied as a result of the changing of the frequency of AC power by the frequency changing unit (120), and (C) a frequency determination unit (124) that determines a frequency during supply, which is the frequency of AC power during supply of AC power to the power reception apparatus (82), to a frequency that corresponds to a value between a value of the first frequency and a value of the second frequency.

2.  The wireless power supply system (80) according to Claim 1,
    wherein the frequency determination unit (124) determines the frequency during supply to a frequency that corresponds to a half of a value obtained by adding the value of the first frequency and the value of the second frequency to each other.

3.  The wireless power supply system (80) according to Claim 1 or 2,
    wherein the power reception apparatus (82) includes a transmitter (90) that detects whether or not AC power is supplied to the power reception apparatus (82) and transmits a detection result to the control device (100), and
    the frequency measurement unit (122) measures the first frequency and the second frequency on the basis of the detection result from the transmitter (90).

4.  The wireless power supply system (80) according to any one of Claims 1 to 3,
    wherein when the first frequency and the second frequency are measured, the frequency changing unit (120) adjusts the changing circuit (94) in such a manner that the frequency of AC power supplied to the power transmission element (96) is raised.

5.  The wireless power supply system (80) according to any one of Claims 1 to 3,
    when the first frequency and the second frequency are measured, the frequency changing unit (120) adjusts the changing circuit (94) in such a manner that the frequency of AC power supplied to the power transmission element (96) is lowered.

6. The wireless power supply system (80) according to any one of Claims 1 to 5,
wherein the control device (100) includes a frequency-during-supply storage unit (126) storing the frequency during supply which is determined by the frequency determination unit (124), and
the wireless power supply system (80) is configured in such a manner that AC power of the frequency during supply which is stored in the frequency-during-supply storage unit (120) is supplied when power is supplied again to the power reception apparatus (82).

7. The wireless power supply system (80) according to any one of Claims 1 to 6,
wherein the frequency changing unit (120) includes a power supply stopping unit (128) that stops power supply to the power reception apparatus (82) by changing the frequency of AC power supplied to the power transmission element (96) to a frequency corresponding to a value different from a value between the value of the first frequency and the value of the second frequency.

**Patentansprüche**

1. Drahtlos-Stromversorgungssystem (80), das umfasst:

a) eine Strom-Sendevorrichtung (84), die ein Strom-Sendeelement (96) und eine Strom-Sendeschaltung (92) enthält, die dem Strom-Sendeelement (96) Wechselstrom zuführt; sowie
b) eine Strom-Empfangsvorrichtung (82), die ein Strom-Empfangselement (86) enthält, das so angeordnet ist, dass es von dem Strom-Sendeelement (96) beabstandet ist,

wobei Wechselstrom der Strom-Empfangsvorrichtung (82) unter Nutzung von Resonanz eines elektromagnetischen Feldes zwischen dem Strom-Sendeelement (96) und dem Strom-Empfangselement (86) zugeführt wird, und
die Strom-Sendevorrichtung (84) eine Änderungs-Schaltung (94), die eine Frequenz von dem Strom-Sendeelement (96) zugeführtem Wechselstrom ändert, sowie eine Steuerungseinrichtung (100) enthält, die a) eine Frequenzänderungs-Einheit (120) enthält, die die Änderungs-Schaltung (94) so reguliert, dass die Frequenz des dem Strom-Sendeelement (96) zugeführten Wechselstroms steuerbar geändert wird,
**dadurch gekennzeichnet, dass**

die Steuerungseinrichtung (100) des Weiteren b) eine Frequenzmessungs-Einheit (122), die eine erste Frequenz, die eine Frequenz von Wechselstrom bei Änderung eines Zufuhr-Status ist, bei der sich ein Status der Stromzufuhr zu der Strom-Empfangsvorrichtung (82) von einem Status, in dem der Strom-Empfangsvorrichtung (82) tatsächlich Wechselstrom zugeführt wird, aufgrund der Änderung der Frequenz des Wechselstroms durch die Frequenzänderungs-Einheit (120) zu einem Status ändert, in dem kein Wechselstrom zugeführt wird, und eine zweite Frequenz misst, die eine andere Frequenz ist als die erste Frequenz und eine Frequenz von Wechselstrom bei Änderung eines Zufuhr-Status, bei der sich ein Status der Stromzufuhr zu der Strom-Empfangsvorrichtung (82) von einem Status, in dem der Strom-Empfangsvorrichtung (82) kein Wechselstrom zugeführt wird, aufgrund der Änderung der Frequenz des Wechselstroms durch die Frequenzänderungs-Einheit (120) zu einem Status ändert, in dem tatsächlich Wechselstrom zugeführt wird, sowie c) eine Frequenzfestlegungs-Einheit (124) enthält, die eine Frequenz bei Zufuhr, die die Frequenz von Wechselstrom bei Zufuhr von Wechselstrom zu der Strom-Empfangsvorrichtung (82) ist, auf eine Frequenz festlegt, die einen Wert zwischen einem Wert der ersten Frequenz und einem Wert der zweiten Frequenz entspricht.

2. Drahtlos-Stromversorgungssystem (80) nach Anspruch 1,
wobei die Frequenzfestlegungs-Einheit (124) die Frequenz bei Zufuhr auf eine Frequenz festlegt, die einer Hälfte eines Wertes entspricht, der ermittelt wird, indem der Wert der ersten Frequenz und der Wert der zweiten Frequenz addiert werden.

3. Drahtlos-Stromversorgungssystem (80) nach Anspruch 1 oder 2,
wobei die Strom-Empfangsvorrichtung (82) eine Sendeeinrichtung (90) enthält, die erfasst, ob der Strom-Empfangsvorrichtung (82) Wechselstrom zugeführt wird oder nicht, und ein Ergebnis der Erfassung zu der Steuerungseinrichtung (100) sendet, und die Frequenzmessungs-Einheit (122) die erste Frequenz und die zweite Frequenz auf Basis des Ergebnisses der Erfassung von der Sendeeinrichtung (90) misst.

4. Drahtlos-Stromversorgungssystem (80) nach einem der Ansprüche 1 bis 3,
wobei, wenn die erste Frequenz und die zweite Frequenz gemessen werden, die Frequenzänderungs-Einheit (120) die Änderungs-Schaltung (94) so reguliert, dass die Frequenz des dem Strom-Sendeelement (96) zugeführten Wechselstroms erhöht wird.

5. Drahtlos-Stromversorgungssystem (80) nach einem

**EP 2 800 242 B1**

der Ansprüche 1 bis 3,
wobei, wenn die erste Frequenz und die zweite Frequenz gemessen werden, die Frequenzänderungs-Einheit (120) die Änderungs-Schaltung (94) so reguliert, dass die Frequenz des dem Strom-Sendeelement (96) zugeführten Wechselstroms gesenkt wird.

6. Drahtlos-Stromversorgungssystem (80) nach einem der Ansprüche 1 bis 5,
wobei die Steuerungseinrichtung (100) eine Einheit (126) zur Speicherung einer Frequenz bei Zufuhr enthält, die die Frequenz bei Zufuhr speichert, die durch die Frequenzfestlegungs-Einheit (124) festgelegt wird, und
das Drahtlos-Stromversorgungssystem (80) so konfiguriert ist, dass Wechselstrom der Frequenz bei Zufuhr, die in der Einheit (126) zur Speicherung einer Frequenz bei Zufuhr gespeichert wird, zugeführt wird, wenn der Strom-Empfangsvorrichtung (82) wieder Strom zugeführt wird.

7. Drahtlos-Stromversorgungssystem (80) nach einem der Ansprüche 1 bis 6,
wobei die Frequenzänderungs-Einheit (120) eine Einheit (128) zum Unterbrechen von Stromzufuhr enthält, die Stromzufuhr zu der Strom-Empfangsvorrichtung (82) unterbricht, in dem die Frequenz des dem Strom-Empfangselement (96) zugeführten Wechselstroms auf eine Frequenz geändert wird, die einem Wert entspricht, der sich von einem Wert zwischen dem Wert der ersten Frequenz und dem Wert der zweiten Frequenz unterscheidet.

**Revendications**

1. Système d'alimentation électrique sans fil (80), comprenant :

(a) un appareil de transmission d'énergie (84) comprenant un élément de transmission d'énergie (96) et un circuit de transmission d'énergie (92) qui fournit un courant alternatif à l'élément de transmission d'énergie (96) ; et
(b) un appareil de réception d'énergie (82) comprenant un élément de réception d'énergie (86) qui est agencé de manière à être situé à une distance de l'élément de transmission d'énergie (96),

dans lequel le courant alternatif est fourni à l'appareil de réception d'énergie (82) en utilisant la résonance d'un champ électromagnétique entre l'élément de transmission d'énergie (96) et l'élément de réception d'énergie (86), et
l'appareil de transmission d'énergie (84) comprend un circuit de changement (94) qui change une fréquence du courant alternatif fourni à l'élément de transmission d'énergie (96), et un dispositif de commande (100) qui comprend (A) une unité de changement de fréquence (120) qui ajuste le circuit de changement (94) pour changer la fréquence du courant alternatif fourni à l'élément de transmission de puissance (96) d'une manière permettant une commande,
**caractérisé en ce que**
le dispositif de commande (100) comprend également (B) une unité de mesure de fréquence (122) qui mesure une première fréquence qui est une fréquence du courant alternatif pendant une variation d'état d'alimentation au cours de laquelle un état de l'alimentation électrique de l'appareil de réception d'énergie (82) est modifié, passant d'un état dans lequel le courant alternatif est réellement fourni à l'appareil de réception d'énergie (82) à un état dans lequel le courant alternatif n'est pas fourni *par suite* du changement de la fréquence du courant alternatif par l'unité de changement de fréquence (120), et une seconde fréquence qui est une fréquence différente de la première fréquence et qui est une fréquence du courant alternatif pendant une variation d'état d'alimentation au cours de laquelle un état de l'alimentation électrique de l'appareil de réception d'énergie (82) est modifié, passant d'un état dans lequel le courant alternatif n'est pas fourni à l'appareil de réception d'énergie (82) à un état dans lequel le courant alternatif est réellement fourni *par suite* du changement de la fréquence du courant alternatif par l'unité de changement de fréquence (120), et (C) une unité de détermination de fréquence (124) qui fixe une fréquence pendant alimentation, laquelle est la fréquence du courant alternatif pendant la fourniture de courant alternatif à l'appareil de réception d'énergie (82), à une fréquence qui correspond à une valeur située entre une valeur de la première fréquence et une valeur de la seconde fréquence.

2. Système d'alimentation électrique sans fil (80) selon la revendication 1,
dans lequel l'unité de détermination de fréquence (124) fixe la fréquence pendant alimentation à une fréquence qui correspond à une moitié d'une valeur obtenue en additionnant la valeur de la première fréquence et la valeur de la seconde fréquence.

3. Système d'alimentation électrique sans fil (80) selon la revendication 1 ou 2,
dans lequel l'appareil de réception d'énergie (82) comprend un émetteur (90) qui détecte si un courant alternatif est fourni ou non à l'appareil de réception d'énergie (82) et envoie un résultat de détection au dispositif de commande (100), et
l'unité de mesure de fréquence (122) mesure la première fréquence et la seconde fréquence sur la base du résultat de détection reçu de l'émetteur (90).

*11*

**4.** Système d'alimentation électrique sans fil (80) selon l'une quelconque des revendications 1 à 3, dans lequel, lorsque la première fréquence et la seconde fréquence sont mesurées, l'unité de changement de fréquence (120) ajuste le circuit de changement (94) de façon que la fréquence du courant alternatif fourni à l'élément de transmission d'énergie (96) soit augmentée.

**5.** Système d'alimentation électrique sans fil (80) selon l'une quelconque des revendications 1 à 3, dans lequel, lorsque la première fréquence et la seconde fréquence sont mesurées, l'unité de changement de fréquence (120) ajuste le circuit de changement (94) de façon que la fréquence du courant alternatif fourni à l'élément de transmission d'énergie (96) soit diminuée.

**6.** Système d'alimentation électrique sans fil (80) selon l'une quelconque des revendications 1 à 5, dans lequel le dispositif de commande (100) comprend une unité d'enregistrement de fréquence pendant alimentation (126) qui enregistre la fréquence pendant alimentation qui est fixée par l'unité de détermination de fréquence (124), et le système d'alimentation électrique sans fil (80) est conçu de façon qu'un courant alternatif ayant la fréquence pendant utilisation qui est enregistrée dans l'unité d'enregistrement de fréquence pendant alimentation (120) soit fourni lorsque de l'énergie est fournie à nouveau à l'appareil de réception d'énergie (82).

**7.** Système d'alimentation électrique sans fil (80) selon l'une quelconque des revendications 1 à 6, dans lequel l'unité de changement de fréquence (120) comprend une unité d'arrêt d'alimentation électrique (128) qui stoppe l'alimentation électrique de l'appareil de réception d'énergie (82) en faisant passer la fréquence du courant alternatif fourni à l'élément de transmission d'énergie (96) à une fréquence correspondant à une valeur différente d'une valeur située entre la valeur de la première fréquence et la valeur de la seconde fréquence.

# FIG. 1

FIG. 2

EP 2 800 242 B1

# FIG. 3

EP 2 800 242 B1

FIG. 4

POWER TRANSMISSION APPARATUS — 84

POWER SUPPLY CONTROL DEVICE — 100

FREQUENCY CHANGING UNIT — 120

POWER SUPPLY STOPPING UNIT — 128

ADJUSTMENT SWITCH — 110

FREQUENCY MEASUREMENT UNIT — 122

STOP SWITCH — 112

FREQUENCY DETERMINATION UNIT — 124

FREQUENCY STORAGE UNIT — 126

POWER TRANSMISSION CIRCUIT — 92

POWER SOURCE — 78

CHANGING CIRCUIT — 94

POWER TRANSMISSION ELEMENT — 96

RECEIVER — 98

POWER RECEPTION APPARATUS — 82

TRANSMITTER — 90

POWER RECEPTION ELEMENT — 86

POWER RECEPTION CIRCUIT — 88

DRIVE CIRCUIT — 76

80

EP 2 800 242 B1

# FIG. 5

POWER SUPPLIED TO POWER RECEPTION APPARATUS

$0$   $f_1$   $f_1'$   $f^*$   $f^{*\prime}$   $f_2$   $f_2'$

FREQUENCY f OF AC POWER

# FIG. 6

```
        FREQUENCY CALIBRATION PROGRAM

                        ↓
        NO         IS
    ┌──────── ADJUSTMENT SWITCH ──┐ S1
    │          TURNED ON?
    ↓                  │ YES
 S14                   ↓
     IS                NO
  FREQUENCY f* ──────────────┐
  DURING SUPPLY              ↓
  DETERMINED?           SUPPLY POWER AT
    │ YES              INITIAL FREQUENCY α ── S2
    │
    │                          ↓
    │      S3 ┐                          NO
    │      IS POWER RECEIVABLE? ──────────┐── S4
    │                  │ YES              ↓
    │  S5 ─ STORE FIRST FREQUENCY f1 = f   FREQUENCY f = f + Δf
    │
    │                  ↓
    │           FREQUENCY f = f + Δf ── S6
    │      S7 ┐        ↓                  YES
    │      IS POWER RECEIVABLE? ──────────┘
    │                  │ NO
    │         STORE SECOND FREQUENCY f2 = f ── S8
    │                  ↓
    │  DETERMINE FREQUENCY f* DURING SUPPLY TO (f1 + f2)/2 ── S9
    │                  ↓
    │     STORE FREQUENCY f* DURING SUPPLY ── S10
    └─────────────────┤
                       ↓
        SUPPLY POWER AT FREQUENCY f* DURING SUPPLY ── S11
        S12 ┐          ↓                             NO
          IS STOP SWITCH TURNED ON? ─────────────────┘
                       │ YES
    CHANGE FREQUENCY TO FREQUENCY SATISFYING f1 > f or f2 < f ── S13
                       ↓
                      END
```

**EP 2 800 242 B1**

**Patent documents cited in the description**

- US 2010259109 A1
- JP 11155245 A
- JP 2007228794 A